# EUROPÄISCHE PATENTANMELDUNG

(11) **EP 1 538 500 A2**
(43) Veröffentlichungstag der Anmeldung: **08.06.2005**
(21) Anmeldenummer: 04021999.0
(22) Anmeldetag: 16.09.2004
(51) Int. Cl.: G05B 19/409

(54) **Verfahren zur Visualisierung, Bewertung und Ermittlung von Prozessgrössen**

(30) Priorität: 25.11.2003 DE 10355371
(71) Anmelder: IOn Aktiengesellschaft, 40699 Erkrath (DE)
(72) Erfinder: Siller, Manfred, 51381 Leverkusen (DE)
(74) Vertreter: COHAUSZ DAWIDOWICZ HANNIG & PARTNER

(57) **Zusammenfassung**

Verfahren zur Visualisierung, Bewertung und Ermittlung von Prozessgrößen auf einer Rechenanlage, wobei Prozessgrößen aus einem Speicher einlesbar und/oder von einem Benutzer eingebbar sind, die unter einer der Prozessgröße zugeordneten Speicheradresse gespeichert wird, mit einer grafischen Benutzeroberfläche, auf der in einzelnen Prozessgrößen zugeordneten Bereichen zumindest eine Bezeichnung für die Prozessgröße und der der Prozessgröße zugeordnete Wert und/oder weitere der Prozessgröße zugeordnete Angaben bzw. ein Platzhalter für einen der Prozessgröße zuzuordnenden zu bestimmenden Wert dargestellt sind, wobei
■ jeder einer Prozessgröße zugeordnete Bereich der grafischen Benutzeroberfläche zumindest ein mit einem grafischen Eingabegerät auswählbares Feld aufweist,
■ durch das Auswählen des Feldes einer ersten Prozessgröße und das Ziehen einer Verbindung mit dem grafischen Eingabegerät zu einem auswählbaren Feld einer zweiten Prozessgröße eine dieser Verbindung der ersten mit der zweiten Prozessgröße in einer Datenbank und/oder in einem der Verbindung zugeordneten Speicheradresse gespeicherten Funktion zur Berechnung zumindest einer sekundären Größe in Abhängigkeit der Werte der ersten und zweiten Prozessgröße ausgeführt wird und
■ diese so erhaltene sekundäre Größe unter einer der sekundären Größe zugeordneten Speicheradresse gespeichert und auf der grafischen Benutzeroberfläche angezeigt wird und/oder in Abhängigkeit der sekundären Größe eine Steuerung des Prozesses erfolgt.

## Beschreibung

Die Erfindung betrifft ein Verfahren zur Visualisierung, Bewertung und Ermittlung von Prozessgrößen auf einer Rechenanlage, wobei Prozessgrößen aus einem Speicher einlesbar und/oder von einem Benutzer eingebbar sind, die unter einer der Prozessgröße zugeordneten Speicheradresse gespeichert wird, mit einer grafischen Benutzeroberfläche, auf der in einzelnen Prozessgrößen zugeordneten Bereichen zumindest eine Bezeichnung für die Prozessgröße und der der Prozessgröße zugeordnete Wert und/oder weitere der Prozessgröße zugeordnete Angaben bzw. ein Platzhalter für einen der Prozessgröße zuzuordnenden zu bestimmenden Wert dargestellt sind.

Es ist bekannt, Prozessgrößen (primäre Größen), die beispielsweise aus einer Datenbank eingelesen werden, mittels einer Rechenanlage auf einer grafischen Benutzeroberfläche abzubilden und die Prozessgrößen zur Berechnung sekundärer Größen in Abhängigkeit der primären Größen heranzuziehen, wobei die sekundären Größen in der Rechenanlage weiterverarbeitet werden und/oder zur Steuerung eines Prozesses dienen. Will man dabei zwei bestimmte Prozessgrößen zur Berechnung einer sekundären Größe heranziehen, wählt man zunächst die beiden primären Prozessgrößen beispielsweise durch Markieren mit einer Maus aus und ruft anschließend die Funktion zur Berechnung der sekundären Größe auf, z.B. durch Betätigung einer entsprechenden Taste oder durch Markieren einer Funktionstaste mit einer Maus. Nachteilig dabei ist, dass die Erzeugung der sekundären Größe in mehreren Teilschritten erfolgt, nämlich:
Auswahl einer ersten primären Prozessgröße,
Auswahl einer zweiten primären Prozessgröße und
Aufruf einer Funktion, die die beiden ausgewählten primären Prozessgrößen zu einer sekundären Größe in der gewünschten Weise verknüpft.

Weiterhin nachteilig dabei ist es, dass die gewünschte Verknüpfungsfunktion zuvor definiert und beispielsweise einer Funktionstaste auf einem Eingabegerät zugeordnet sein muss.

Aufgabe der Erfindung ist es, ein Verfahren der eingangs genannten Art so zu verbessern, dass die Auswahl zweier primären Prozessgrößen und die Ermittlung einer sekundären Größe in Abhängigkeit der primären Prozessgrößen für den Benutzer vereinfacht wird und die ermittelte sekundäre Prozessgröße unmittelbar der Steuerung eines Prozesses und/oder einer Weiterverarbeitung in der Rechenanlage zuführbar ist. Dabei sollen die erforderlichen Eingaben durch den Benutzer und die benötigten Schritte reduziert werden.

Diese Aufgabe wird erfindungsgemäß dadurch gelöst,
dass jeder einer Prozessgröße zugeordnete Bereich der grafischen Benutzeroberfläche zumindest ein mit einem grafischen Eingabegerät auswählbares Feld aufweist,
wobei durch das Auswählen des Feldes einer ersten Prozessgröße und das Ziehen einer Verbindung mit dem grafischen Eingabegerät zu einem auswählbaren Feld einer zweiten Prozessgröße eine dieser Verbindung der ersten mit der zweiten Prozessgröße in einer Datenbank und/oder in einem der Verbindung zugeordneten Speicheradresse gespeicherten Funktion zur Berechnung zumindest einer sekundären Größe in Abhängigkeit der Werte der ersten und zweiten Prozessgröße ausgeführt wird und
diese so erhaltene sekundäre Größe unter einer der sekundären Größe zugeordneten Speicheradresse gespeichert und auf der grafischen Benutzeroberfläche angezeigt wird und/oder in Abhängigkeit der sekundären Größe eine Steuerung des Prozesses erfolgt.

Hierdurch wird ein Verfahren geschaffen, das es dem Benutzer erlaubt, in einem einzigen Vorgang, das Ziehen einer Verbindungslinie auf der grafischen Benutzeroberfläche, eine Verknüpfung zweier primärer Prozessgrößen zur einer sekundären Größe zu Erzeugen, die der Prozesssteuerung und/oder weiteren Verarbeitung zur Verfügung steht. Weitere Vorteile liegen in der Visualisierung der Verbindung zweier Prozessgrößen und der intuitiven Anwendung des Verfahrens.

Weitere vorteilhafte Ausgestaltungen des erfindungsgemäßen Verfahrens sind in den Unteransprüchen gegeben.

In einer bevorzugten Ausführungsform wird vorgeschlagen, dass die sekundären Größe als das prozentuale Verhältnis der zweiten Prozessgröße zur ersten Prozessgröße berechnet und unter einer der sekundären Größe zugeordneten Speicheradresse gespeichert und auf der grafischen Benutzeroberfläche angezeigt wird und/oder in Abhängigkeit der sekundären Größe eine Steuerung des Prozesses erfolgt. Vorteilhaft ist hierbei, dass eine Funktion zur Verknüpfung der beiden ausgewählten primären Prozessgrößen bereits systemseitig vordefiniert ist.

Des weiteren kann das Verfahren so ausgestaltet sein, dass der sekundären Größe ein Bereich der Benutzeroberfläche zugeordnet wird, wobei dieser Bereich der Benutzeroberfläche zumindest ein auswählbares Feld aufweist, wobei das Auswählen dieses Feldes die sekundäre Größe als erste oder zweite Prozessgröße definiert. Hierdurch wird die Weiterverarbeitung der sekundären Größe durch das erfindungsgemäße Verfahren erleichtert, da die sekundäre Größe mit jeder anderen primären oder sekundären Größe gleichfalls verknüpfbar ist.

Der Bereich auf der grafischen Benutzeroberfläche, der einer Größe zugeordnet ist, kann weitere auswählbare Felder aufweisen, denen Funktionen zugeordnet sind, mittels derer eine Verarbeitung der Größen durch die Rechenanlage erfolgt und mindestens ein Feld, mittels dessen Auswahl eine grafische Darstellung eines der Größe zugeordneten aus mehreren Feldern bestehenden Datensatzes erfolgt und wobei die Einträge in die Felder des der Größe zugeordneten Datensatzes veränderbar und speicherbar sind (Detail-Funktion).

Die grafische Benutzeroberfläche kann einen Bereich aufweisen, in dem bei Auswahl einer Prozessgröße oder eines einer Prozessgröße zugeordneten auswählbaren Feldes zumindest die Bezeichnung und der Wert dieser Prozessgröße vergrößert dargestellt werden (Zoom-Funktion).

In einem weiteren Bereich der grafischen Benutzeroberfläche kann eine verkleinerte Gesamtübersicht über alle verfügbaren Prozessgrößen darstellbar sein, wobei in dieser Gesamtübersicht Bereiche durch Felder auswählbar sind, die bei Auswahl in einem anderen Bereich der Benutzeroberfläche in Normalgröße dargestellt werden (Übersichts-Funktion).

Das Verfahren kann weiterhin eine Detailansichts-Funktion aufweisen dergestalt, dass bei Ausführen dieser Funktion des Verfahrens, dass bei Prozessgrößen, die aus Primärgrößen, insbesondere Messgrößen berechnete Prozessgrößen sind, der der Prozessgröße zugeordnete Bereich der Benutzeroberfläche ein auswählbares Feld aufweist, wobei durch das Auswählen dieses Feldes eine Darstellung einer Übersicht auf der Benutzeroberfläche über die der Prozessgröße zugrundeliegenden Primärgrößen und/oder der Werte der Primärgrößen erzeugt wird. Es können den Prozessgrößen eine Vielzahl von beispielsweise Messgrößen, die von Sensoren geliefert werden, aus dem zu überwachenden Prozess zugrunde liegen, die somit visualisierbar sind und/oder deren funktionale Verknüpfung zur Ermittlung der Prozessgrößen durch den Benutzer durch Eingabe mittels geeigneter Eingabegeräte beeinflussbar sind.

Bei dem grafischen Eingabegerät kann es sich um eine Maus mit zumindest einer Eingabetaste handeln, mit der sich ein Zeiger (Cursor), d.h. eine auf dem Bildschrim sichtbare Markierung, auf der grafischen Benutzeroberfläche frei bewegen läßt und mittels der Bereiche der grafischen Benutzeroberfläche auswählbar sind, insbesondere durch Hinbewegen des Zeigers zu diesem Bereich und/oder durch Hinbewegen des Zeigers zu diesem Bereich und Betätigung der Eingabetaste der Maus.

Alternativ kann das grafische Eingabegerät ein Lichtgriffel sein, mit dem Bereiche auf der grafischen Benutzeroberfläche auf dem Wiedergabegerät, insbesondere auf dem Bildschirm, insbesondere durch Berühren des Wiedergabegerätes an der Stelle des Bereiches mit dem Lichtgriffel, auswählbar sind.

Die grafische Benutzeroberfläche kann in mehrere Bereiche aufgeteilt sein, wobei in den Bereichen Prozessgrößen platziert werden und wobei die Platzierung einer Prozessgröße relativ zu einer anderen Prozessgröße die Reihenfolge der Behandlung der Prozessgrößen in der Prozessrechnung definiert, beispielsweise in der Art, dass eine Verknüpfung der Prozessgrößen von oben nach unten erfolgt.

Die Anordnung der Prozessgrößen kann dreidimensional in mehreren Schichten erfolgen, wobei die Schichten übereinander liegen und alternativ auf der grafischen Benutzeroberfläche angezeigt werden können, wobei insbesondere Prozessgrößen unterschiedlicher Schichten verknüpfbar sind und Ergebniswerte von Verknüpfungen an andere Schichten weitergegeben werden können.

Vorzugsweise ist die Darstellung einer Prozessgröße auf der grafischen Benutzeroberfläche zumindest dreiteilig, wobei neben der Bezeichnung der Prozessgröße zumindest zwei Kategorien anzeigbar sind, insbesondere der Status des Prozesses und/oder begleitende Zustandsbeschreibungen des Prozesses sowie zumindest ein Wert, der die Prozessgröße zahlenmäßig charakterisiert, wie beispielsweise ein aktueller Messwert, der von einem Sensor geliefert wird.

Ein erstes Ausführungsbeispiel der Erfindung ist in den Zeichnungen dargestellt und wird im Folgenden näher beschrieben.

Es zeigen
- Fig. 1: Eine Ansicht der grafischen Benutzeroberfläche
- Fig. 2: Eine Ansicht des einer Prozessgröße zugeordneten Bereiches der grafischen Benutzeroberfläche
- Fig. 3: Eine Ansicht der grafischen Benutzeroberfläche mit mehreren Verknüpfungen zwischen Prozessgrößen
- Fig. 4: Eine Ansicht der grafischen Benutzeroberfläche mit aktiviertem Vergrößerungsfeld (Zoom-Funktion)
- Fig. 5: Eine Ansicht der grafischen Benutzeroberfläche mit aktiviertem Detailfeld (Detail-Funktion)
- Fig. 6: Eine Ansicht der grafischen Benutzeroberfläche mit gleichzeitig aktiviertem Vergrößerungsfeld (Zoom-Funktion) und Detailfeld (Detail-Funktion)
- Fig. 7: Eine Ansicht der grafischen Benutzeroberfläche mit aktiviertem Gesamtübersichtsfenster (Übersichts-Funktion)
- Fig. 8: Eine Ansicht der grafischen Benutzeroberfläche mit aktiviertem Sonderfunktionsfenster
- Fig. 9: Eine Ansicht der grafischen Benutzeroberfläche mit aktiviertem Funktionseingabe-Fenster
- Fig. 10: Eine Ansicht der grafischen Benutzeroberfläche mit aktiviertem kontextsensitiven Menü

Kostenstellen- und Kostenträgerrechnung in einem Landesministerium:
Im Folgenden wird ein Beispiel für ein Landesministerium konstruiert. Das Ministerium soll in 5 Abteilungen mit je 10 Referaten A, B, C, D, E gegliedert sein. Darüber gibt es die "Hausspitze", d.h. den Minister/die Ministerin und das Mnisterbüro. Die Referate der ersten Abteilung sind für die hausinternen Arbeiten zuständig, z.B. Innerer Dienst, IT, Haushalt, Personal, etc.. Die vier weiteren Abteilungen stehen für die jeweiligen Schwerpunkt-Themen des Ministerium, z.B. Gesundheit, Soziales, Frauen und Familie. Dort werden die eigentlichen Verwaltungsaufgaben, die Produkte des Ministeriums, erstellt. Eine der Aufgaben der Kostenrechnung ist es, die Kosten dieser Produkte transparent zu machen und den Aufwand in Euro zu bestimmen, der für die jeweilige Dienstleistung des Ministeriums aufgebracht wird.

Für die Kostenrechnung teilt man dieses Ministerium in Kostenstellen auf, um erkennen zu können, wo die Kosten anfallen. Dabei kann unterschieden werden in Kostenstellen, bei denen Produkte erstellt werden (Endkostenstellen) und welche, die für die Aufrechterhaltung der Arbeitsbedingungen verantwortlich sind, damit in anderen Kostenstellen die Produkte hergestellt werden können (Vor- oder Hilfskostenstellen). Bei der Verbuchung von Ausgaben werden Angaben mit erfasst wie: um welche Art von Ausgabe es sich handelt (Kostenart), wo diese Ausgabe primär zu verantworten ist (Kostenstelle) und wofür diese Ausgabe nötig ist (Kostenträger, Produkt).

In den seltensten Fällen kann in der Verwaltung exakt angegeben werden, für welches Produkt eine Ausgabe getätigt wird, da Personalausgaben, Anschaffungen (z.B. Drucker) und laufende Kosten (z.B. Strom, Heizung, Miete) nicht produktspezifisch sind. Diese Gemeinkosten, werden daher von ihrem Entstehungsort, der Kostenstelle, auf die Endkostenstellen bzw. die betreffenden Produkte verrechnet.

Die Vorkostenstellen sind von ihrer Art sehr unterschiedlich und können nicht über eine gleiche Verteilung auf die Endkostenstelle oder den Produkten verteilt werden. Eine Vorkostenstelle Fuhrpark z.B. wird anders verrechnet als eine Vorkostenstelle "Personalverwaltung". Wenn eine Endkostenstellle z.B. das Referat IIA4 niemals den Fuhrpark in Anspruch nimmt, sollte dieses Referat nicht mit Kosten aus dieser Vorkostenstelle belastet werden. Die Kosten der Heizung sollten anders verrechnet werden als die des IT-Referats; nämlich die der Heizung über den jeweils genutzten Raum (Referate mit hohem Raumbedarf sollten mehr Kosten tragen als die mit wenig Raumbedarf) und die des IT-Referats z.B. über die Anzahl der PC-Geräte oder Anzahle der Softwareprodukte, die in den Referaten im Einsatz sind. Neben diesen indirekten Verrechnungsgrößen gibt es direkte Verrechnungsgrößen, die sich nach dem aktuellen Verbrauch in einer Periode (meist ein Monat) richten (z.B. Anzahl der versendeten Briefe). Der Verrechnungsschlüssel, nach dem die Kosten einer Vorkostenstelle auf eine Menge an Endkostenstellen verteilt werden, wird nach dem jeweiligen Anteil der Endkostenstellen an einem gemeinsamen Merkmal gebildet.

### Einrichtung der Ebene der Kostenstellen

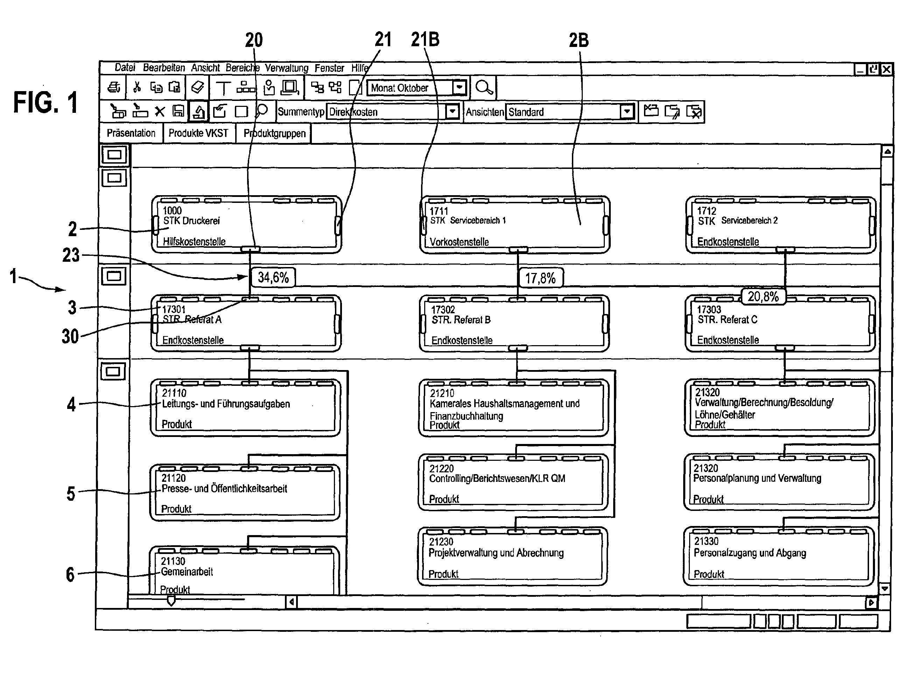

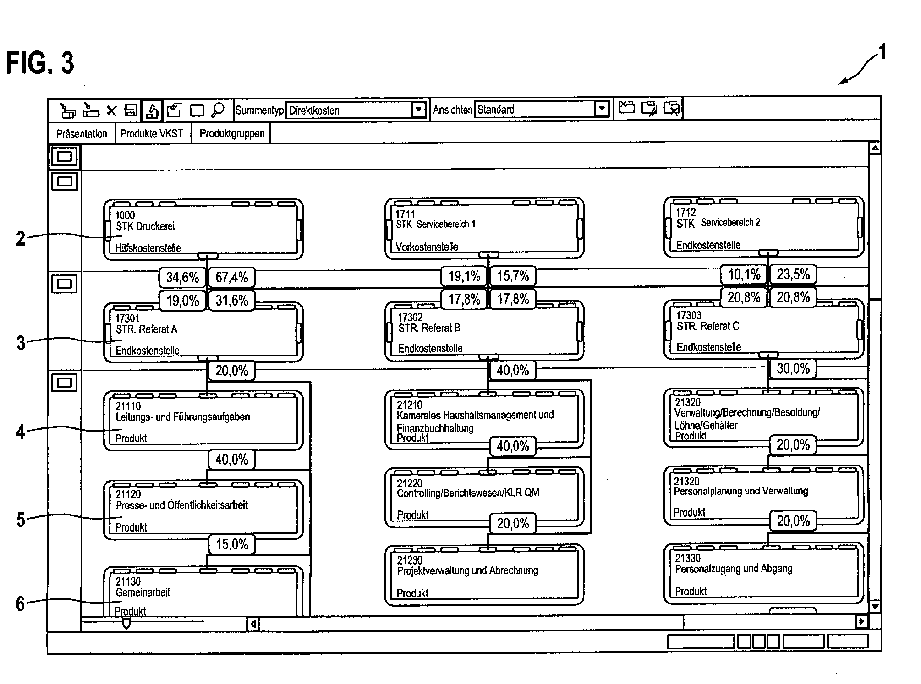

Im Grafiktableau (1) (grafische Benutzeroberfläche) werden alle Kostenstellen (Vorkosten-, Hilfs- und Endkostenstellen) als Objekte (2, 2B, 3, 4, 5, 6) eingerichtet. In dem Beispiel sollen die Vorkostenstellen (2, 2B) im Bereich des Verrechnungsschrittes 0, die Hilfskostenstellen (4, 5, 6) im Verrechnungsschritt 1 und die Endkostenstellen (3) im Verrechnungsschritt 2 erstellt werden. Die Endkostenstellen (3) sind gemäß ihrer Zugehörigkeit zu den Abteilungen vertikal im Verrechnungsschritt 2 anzuordnen. Sie ergeben dann eine Übersicht, die dem Orgaplan entspricht. Diese vertraute Darstellung vereinfacht die Orientierung zwischen den ca. 40 Objekten (4 Abteilungen ä 10 Referaten) erheblich. Mit der Maus werden dann Verbindungen zwischen den zu verrechnenden Vor- bzw. Hilfskostenstellen und den jeweiligen zu berücksichtigen Endkostenstellen gezogen. Dabei wird der Lichtzeiger auf die untere Andockstelle (auswählbares Feld) (20) des abgebenden Objektes positioniert, die linke Maustaste gedrückt und mit gedrückter Maustaste die obere Andockstelle (30) eines Zielobjektes fokussiert. Nach dem Loslassen der Maustaste ist die Verbindung (23) erzeugt. Das Verfahren prüft automatisch, welche Merkmale der Zielobjekte gemeinsam vorkommen und bietet diese dem Anwender zur Auswahl an. Dieser entscheidet durch Anklicken, auf welcher Basis der Verrechnungsschlüssel für die konkrete Verrechnung gebildet werden soll (z.B. Bürogröße). Der auf dieser Basis ermittelte Anteil für jedes Zielobjekt wird im Grafiktableau durch einen Klick auf die Verbindunglinie (23) in Prozent angezeigt. Alle Kosten, die in der zu betrachtenden Periode dem Quellobjekt zugeordnet werden, werden bei den Verrechnungsläufen entsprechend dem Verrechnungsschlüssel auf die Zielobjekte verteilt (Fig. 1, 3).

Gibt es zwei (oder mehrere) Kostenstellen, die sowohl Leistungen für andere Kostenstellen erbringen (abgebendende Verrechnung) als auch Leistungen von diesen beziehen (annehmende Verrechnung), so muss eine bidirektionale Verbindung aufgebaut werden. Dazu werden die betreffenden Objekte an den seitlichen Andockstellen (21, 21 B) miteinander verbunden und für beide Richtungen Verrechnungsschlüssel gebildet. Bei der Periodenverrechnung der Kosten werden diese in einem iterativen Verfahren anhand dieses Schlüssels auf die beteiligten Objekte verteilt.
Beispiel: Das IT-Referat bezieht Leistungen von der Personalverwaltung (Basis für den Verrechnungsschlüssel: Anzahl der Mitarbeiter im IT-Referat) und liefert Leistungen an das Personal-Referat (Basis für den Verrechnungsschlüssel : Anzahl der PCs im Personalreferat).

### Einrichtung der Ebenen der Produkte

Zur Übersichtlichkeit werden für die jeweiligen Endkostenstellen (2, 2B) und deren Produkte in dem Beispiel getrennte Tableau-Ebenen erzeugt. Dafür gibt es auf den grafischen Objekten einen Verknüpfungsbutton (auswählbares Feld). Mit diesem Button erzeugt man ein identisches Objekt auf einer anderen Ebene. Im nächsten Verrechnungsschritt auf dieser Ebene werden dann die Objekte für die Produkte (Leistungen, Projekte) erstellt, für die das jeweilige Referat (Endkostenstelle) (2, 2B) verantwortlich ist. Mit der Maus werden Verbindungen von der Kostenstelle und ggf. Hilfskostenstellen zu den jeweiligen Produkten gezogen und der Verrechnungsschlüssel festgelegt. Ist die Verknüpfung eingerichtet, so kann mit Hilfe dieses Buttons schnell zwischen den Ebenen hin und her gesprungen werden.

### Durchführung der Periodenrechnung

Bei Auslösen der Funktion "Periodenrechnung" wird geprüft, ob alle Angaben zu direkten Verrechnungsmerkmalen für die zu berechnende Periode erfasst worden sind, also alle Verrechnungsschlüssel, die sich auf den konkreten Verbrauch in der Periode beziehen, automatisch gebildet werden können. Danach erfolgt die Aufteilung der verschiedenen Kostenarten zwischen den Kostenstellen entsprechend der Verrechnungsschritte von "oben" bis "unten" und der eingestellten Verbindungen und deren Verrechnungsschlüssel (Kostenstellenrechnung). In der gleichen Weise werden anschließend die Verrechnungen auf die Produkte durchgeführt (Kostenträgerrechnung).

### Darstellung der Verrechnungsergebnisse

Mit Hilfe der Funktion "Optionen" können den eingerichteten Objekten Wertefelder zugeordnet werden, so dass in dem grafischen Objekt der Kostenstelle oder des Produktes direkt die Ergebnis-Werte sichtbar sind (z.B. Wert der Personalkosten, der Pensionsrückstellungen, der Sachmittel, der Reisekosten, der Fortbildungskosten,...). Ob und welche Felder angezeigt werden, lässt sich in verschiedenen Ansichten abspeichern, so dass ein bedarfsgerechter Wechsel zwischen der Anzeige verschiedener Felder schnell möglich ist.

Eine Auswahlfunktion erlaubt den schnellen Wechsel der Anzeige der Werte vor der Verrechnung und nach der Verrechnung. Es lassen sich aber auch die Werte für die "Direktkosten" (Kosten, die direkt zu dem betreffenden Objekt verbucht wurden) und der verrechneten Kosten zusammen darstellen.

Als Ergebnis hat man auch die Summe aller Kosten einer Periode auf einem Produkt-Objekt. Wurde auch in der Periode die Anzahl der erstellten Produkte erfasst, so kann in dem grafischen Objekt neben den Gesamtkosten auch die interessante Größe angezeigt werden, wie viel Kosten die Erstellung einer Einheit des Produktes verursacht hat.

### Bildung von Produktgruppen und Produktbereichen

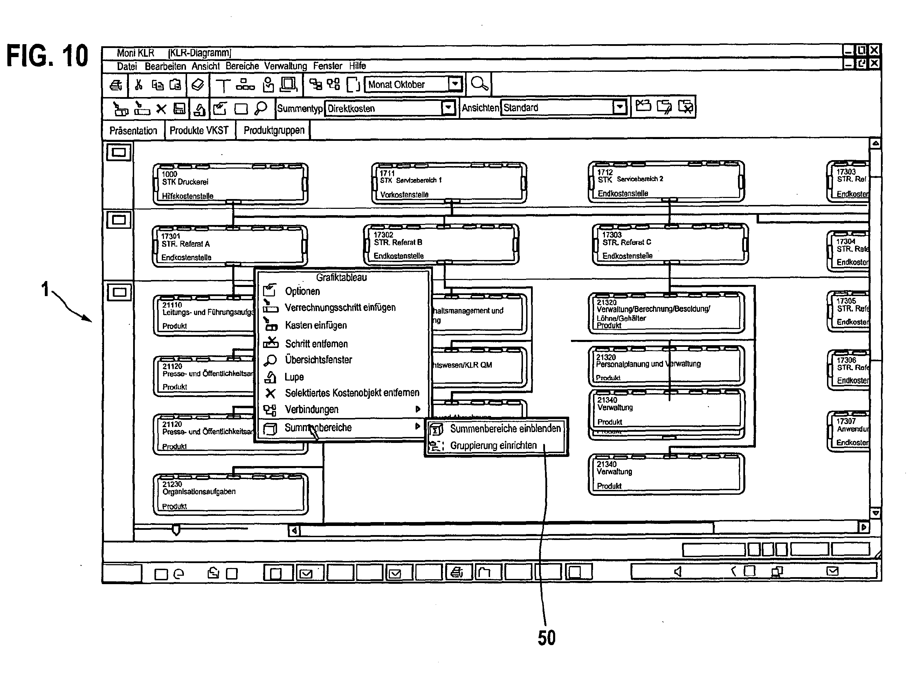

Zur besseren Vergleichbarkeit zwischen Behörden und zur vereinfachten Planung im Produkthaushalt werden die Produkte zu Produktgruppen und diese zu Produktbereichen aggregiert. Im Grafik-Tableau (1) werden zu diesem Zweck die zu einer Produktgruppe zusammen zu fassenden Produkte mit gedrückt gehaltener Funktions-Taste angeklickt und im Kontextsensitiven Menü (50) (rechte Maustaste) die Funktion "Gruppierung anlegen" ausgewählt (Fig. 10). Automatisch wird im Summenbereich für diese Gruppierung ein neues Summenobjekt angelegt. Bei einer Periodenberechnung werden unter diesem Summenobjekt die Summen aller Datensätze der Gruppenmitglieder gebildet. Innerhalb des Summenbereiches können Summenobjekte wiederum gruppiert werden, so dass hoch verdichtete Summenobjekte entstehen (Produktbereiche).

### Übersichten

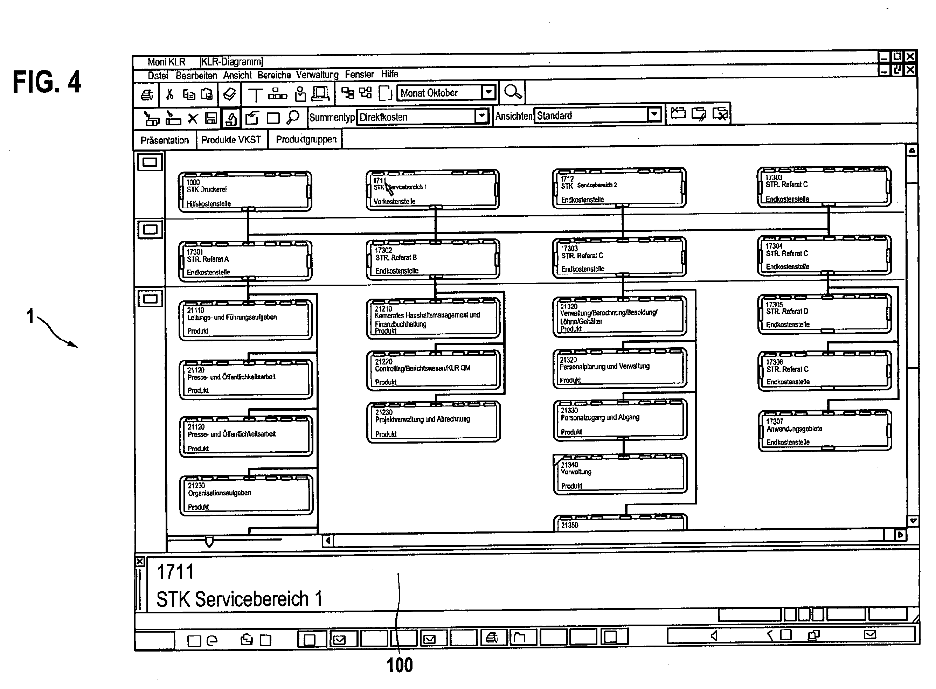

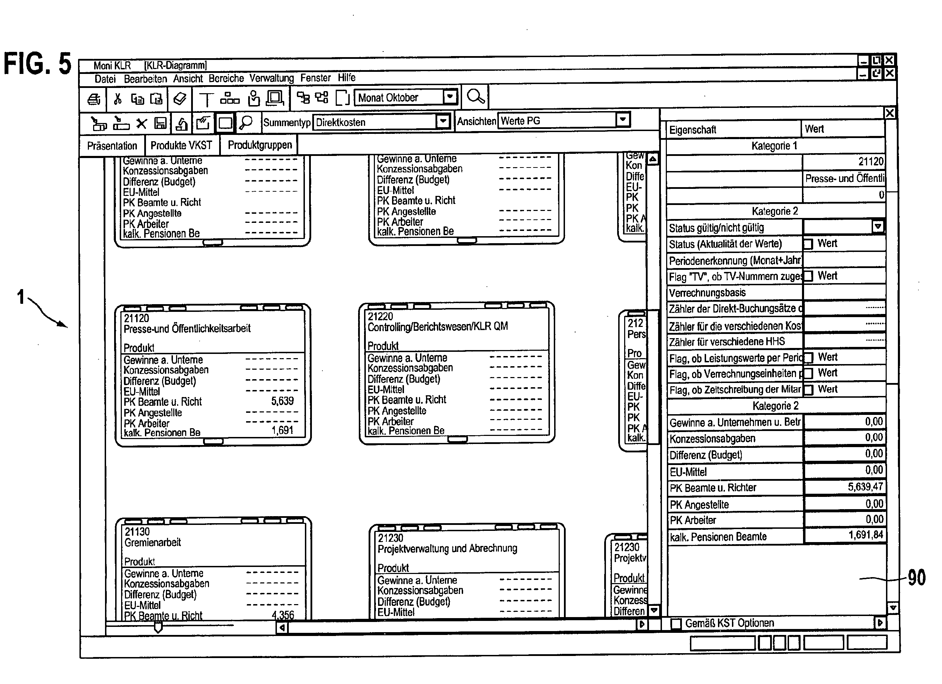

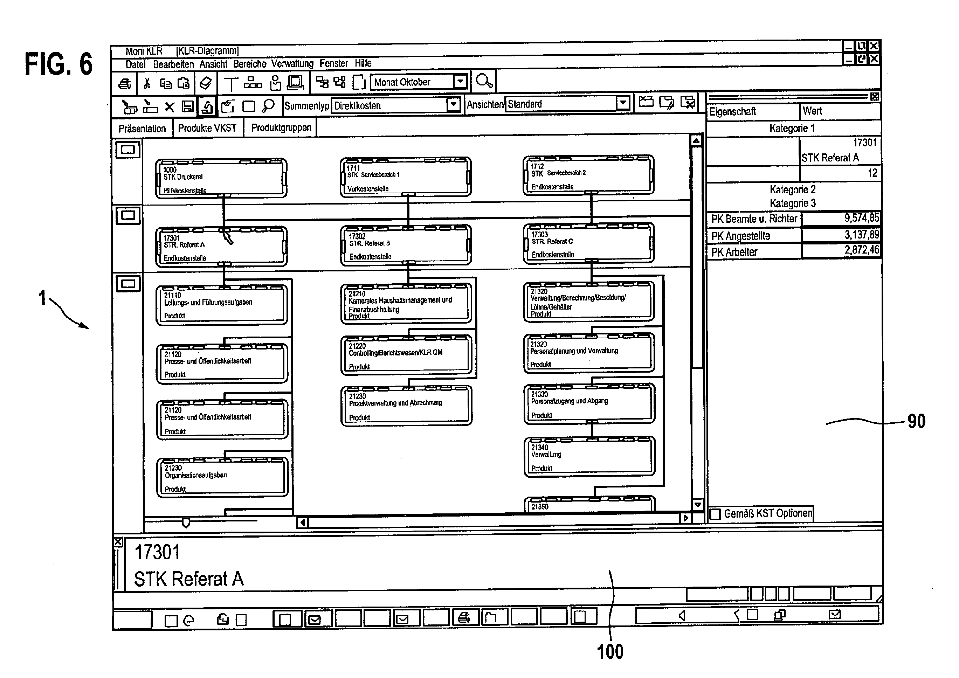

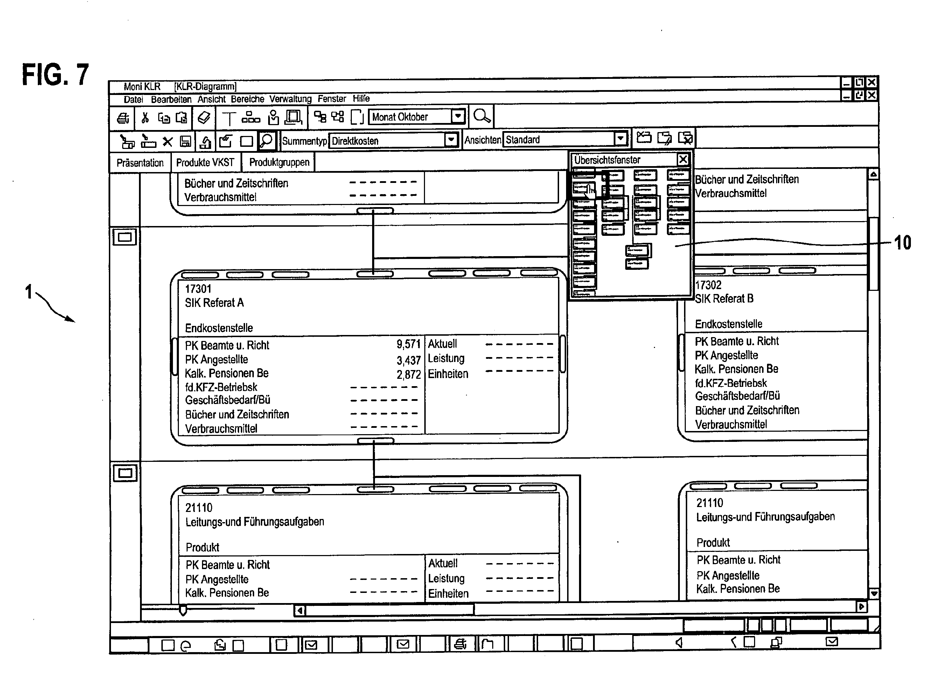

Um die eingerichtete Beziehung zwischen den Kostenstellen und den Produkten im Überblick zu erkennen, lassen sich die grafischen Objekte in einfacher Form nur mit ihrem Namen und ihrem Typ darstellen. Das Grafiktableau kann im Maßstab sehr verkleinert werden. Mit einer Lupenfunktion wird der Bereich unterhalb des Lichtzeigers in einem separaten Fenster (100) vergößert dargestellt (Fig. 4, 6).
Die Funktion "Detailfenster" zeigt für ein fokussiertes Objekt in einem separaten Fenster (90) die Werte der Felder an, die für die Ansicht gespeichert wurden (Fig. 5, 6).
Bei einer Vergrößerung des Grafiktableaus (1) hilft das Übersichtsfenster (10), den sichtbaren Bereich als Ausschnitt der Struktur zu erkennen und leicht einen anderen Bereich aufzusuchen (Fig. 7).

Die Form der grafischen Festlegung von Beziehungen zwischen den Kostenstellen und zwischen Kostenstellen und Produkten ist nicht nur eine erhebliche Vereinfachung der Einrichtung der Struktur bei der Menge an unterschiedlich bedingten Verrechnungen, sondern es hilft sehr stark bei dem Aufbau eines Verständnisses für die Kostenrechnung bei nicht betriebswirtschaftlich ausgebildeten Mitarbeitern im öffentlichen Dienst. Durch eine Orientierung an den bekannten Strukturen eines Orgaplans und der Visualisierung der einzelnen Verrechnungsschritte und deren Perioden-Ergebnisse erschließt sich die Bedeutung der unterschiedlichen Kosten intuitiver.

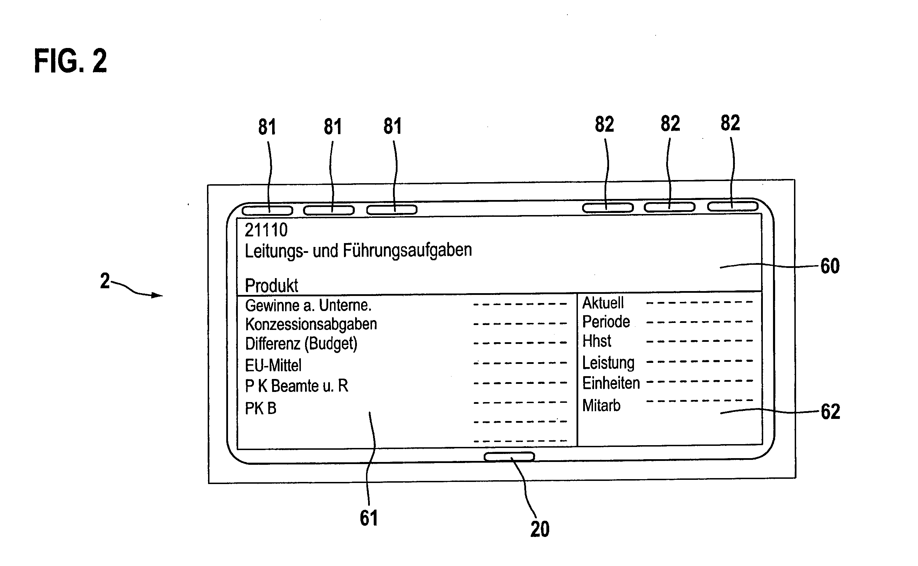

Die Darstellung einer Prozessgröße auf der grafischen Benutzeroberfläche (1) ist wie in Fig. 2 dargestellt, dreiteilig, wobei neben der Bezeichnung der Prozessgröße (60) zumindest zwei Kategorien (61, 62) anzeigbar sind, insbesondere der Status des Prozesses und/oder begleitende Zustandsbeschreibungen des Prozesses sowie zumindest ein Wert, der die Prozessgröße zahlenmäßig charakterisiert.

Der Bereich (2) auf der grafischen Benutzeroberfläche (1), der einer Größe zugeordnet ist, weist weitere auswählbare Felder (Buttons) (81, 82) auf, denen Funktionen zugeordnet sind, mittels derer eine Verarbeitung der Größen durch die Rechenanlage erfolgt und mindestens ein Feld, mittels dessen Auswahl eine grafische Darstellung eines der Größe zugeordneten aus mehreren Feldern bestehenden Datensatzes in einem Detailfenster (90) (Fig. 5, 6) erfolgt und wobei die Einträge in die Felder des der Größe zugeordneten Datensatzes veränderbar und speicherbar sind (Detail-Funktion).

Die grafische Benutzeroberfläche (1) weist einen Bereich (100) auf, in dem bei Auswahl einer Prozessgröße oder eines einer Prozessgröße zugeordneten auswählbaren Feldes zumindest die Bezeichnung und der Wert dieser Prozessgröße vergrößert dargestellt wird (Zoom-Funktion) (Fig. 4, 6).

In einem weiteren Bereich der grafischen Benutzeroberfläche (1) kann eine verkleinerte Gesamtübersicht (10) über alle verfügbaren Prozessgrößen darstellbar sein, wobei in dieser Gesamtübersicht (10) Bereiche (2, 2B, 3, 4, 5, 6) durch Felder auswählbar sind, die bei Auswahl in einem anderen Bereich der Benutzeroberfläche (1) in Normalgröße dargestellt werden (Übersichts-Funktion).

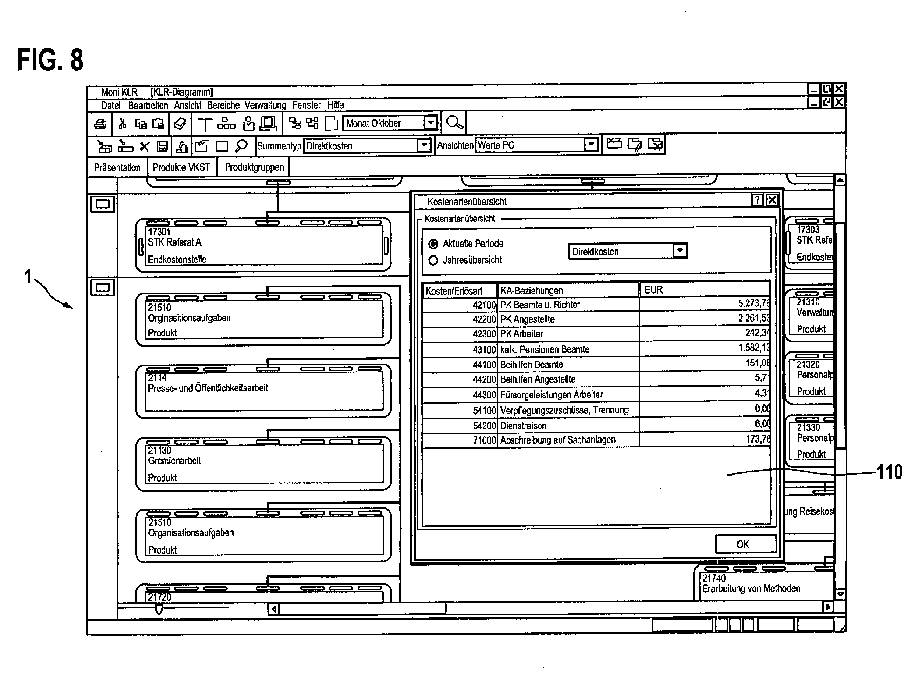

Das Verfahren umfasst weiterhin eine Detailansichts-Funktion dergestalt, dass bei Prozessgrößen, die aus Primärgrößen, insbesondere Messgrößen berechnete Prozessgrößen sind, der der Prozessgröße zugeordnete Bereich der Benutzeroberfläche ein auswählbares Feld aufweist, wobei durch das Auswählen dieses Feldes eine Darstellung einer Übersicht (110) auf der Benutzeroberfläche (1) über die der Prozessgröße zugrundeliegenden Primärgrößen und/oder der Werte der Primärgrößen erzeugt wird (Fig. 8). Es können den Prozessgrößen eine Vielzahl von beispielsweise Messgrößen, die von Sensoren geliefert werden, aus dem zu überwachenden Prozess zugrunde liegen, die somit visualisierbar sind und/oder deren funktionale Verknüpfung zur Ermittlung der Prozessgrößen durch den Benutzer durch Eingabe mittels geeigneter Eingabegeräte beeinflussbar sind.

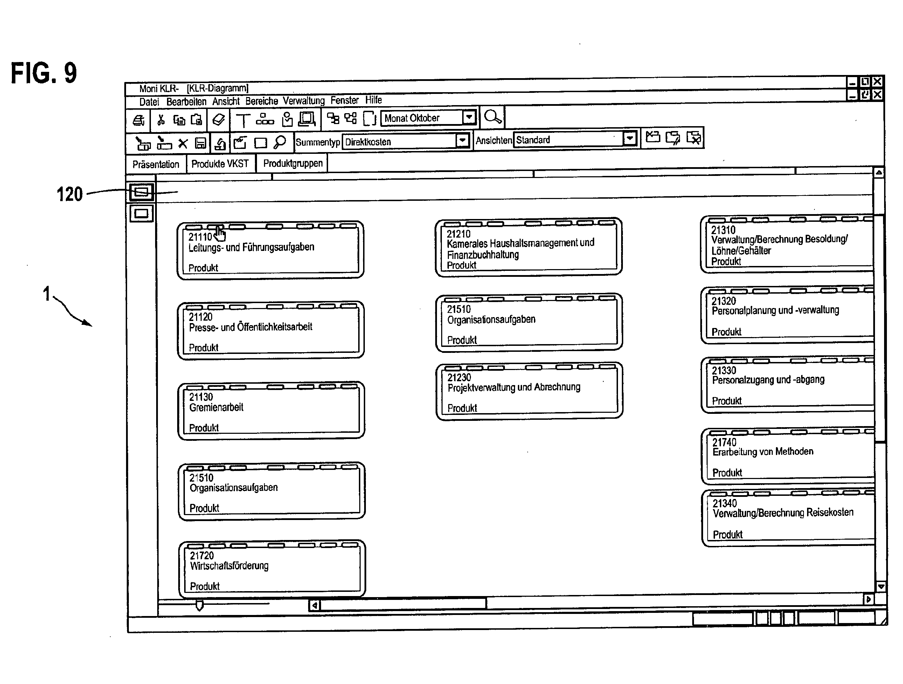

Die grafische Benutzeroberfläche (1) weist ein Eingabefeld (120) auf, in das Funktionen zur Verknüpfung von Prozessgrößen eingebbar sind (Fig. 9).

In einem weiteren, nicht dargestellten Ausführungsbeispiel dient das erfindungsgemäße Verfahren der grafischen Darstellung von Messgrößen (Prozessgrößen) sowie der Verknüpfung dieser Messgrößen zur Steuerung des Prozesses. Die Prozessgrößen werden als Messgrößen unmittelbar von entsprechenden Sensoren zur Aufnahme der Messgrößen zur Verfügung gestellt oder aus einer Datenbank eingelesen. Mit Hilfe der grafischen Benutzeroberfläche werden die Prozessgrößen, wie beispielsweise Drücke, Temperaturen, Drehzahlen visualisiert und sind analog zum vorhergehenden Ausführungsbeispiel untereinander verknüpfbar. Mit diesen Verknüpfungen können zuvor hinterlegte, zu den Prozessgrößen gehörende Funktionszusammenhänge aufgerufen werden, um in Abhängigkeit der Prozessgrößen sekundäre Größen, wie z.B. relative Drehzahlen, Leistungsaufnahme, Leistungsabgabe zu ermitteln. Die berechneten sekundären Größen werden unter diesen Größen zugeordneten Speicheradressen und/oder in einer Datenbank gespeichert und/oder dienen der Steuerung des Prozesses.

Zu jeder Prozessgröße ist ein Datensatz hinterlegt, in dem zugehörige Bezugsgrößen gespeichert sind. So wird z.B. in einer Verdichteranlage die relative Drehzahl in Abhängigkeit der momentanen Drehzahl, der momentanen Eintrittstemperatur und einer Bezugstemperatur ermittelt.

Zur der Prozessgröße "momentane Eintrittstemperatur" ist somit in einem zugehörigen Datensatz die Bezugstemperatur gespeichert. Bei Erstellen einer Verknüpfung der Andockstelle der Größe "momentane Eintrittstemperatur" mit der Andockstelle der Größe "momentane Drehzahl" wird somit die zu dieser Verknüpfung gehörende Funktion zur Ermittlung der relativen Drehzahl aufgerufen wobei gleichzeitig auf die in dem Datensatz hinterlegte Bezugstemperatur zurückgegriffen wird. Die ermittelte "relative Drehzahl" wird auf der grafischen Benutzeroberfläche angezeigt und steht der Rechenanlage für weitere Berechnungen und/oder der Steuerung der Anlage zur Verfügung.

Der zu einer Größe gehörende Datensatz läßt sich auf der grafischen Benutzeroberfläche im Detail darstellen (Detail-Funktion). Weiterhin kann der Wert der Größe und ihre Bezeichnung in einem Ansichtsfeld vergrößert wiedergegeben werden (Zoom-Funtion).

Es kann ein Übersichtsfenster aufgerufen werden, in dem eine verkleinerte Übersicht über die gesamte Anlage und/oder sämtliche Prozessgrößen angezeigt wird (Übersichts-Funktion). Durch markieren eines bestimmten Bereiches in der Übersicht wird dieser Bereich auf der grafischen Benutzeroberfläche angezeigt. Der Bereich der grafischen Benutzeroberfläche, der der ausgewählten Prozessgröße zugeordnet ist, wird dabei immer auf dem Grafiktableau zentriert, um zu gewährleisten, dass Zusatzfenster zu dieser Größe immer an der selben Position des Grafiktableaus (grafische Benutzoberfläche) angezeigt werden.

Die unterschiedlichen Größen können in mehreren Schichten übereinander angeordnet sein. So gehört die momentane Drehzahl zu einer untersten Schicht mit den aktuellen Messwerten, die von den Sensoren geliefert werden. Die daraus ermittelte relative Drehzahl gehört zu einer zweiten Schicht, die jene Werte umfasst, die aus den Messwerten rechnerisch ermittelt wurden. Eine weitere Schicht umfasst tertiäre Größen, deren Berechnung auf Werten der zweiten Schicht oder auf Werten der ersten und zweiten Schicht beruht. Die verschiedenen Schichten sind farblich abweichend gekennzeichnet und können auf dem Grafiktableau angezeigt werden.

In den Detailfenstern zu den einzelnen Größen können neue Funktionen für bestimmte Verknüpfungen eingegeben werden, die in dem Datensatz zu der jeweiligen Größe hinterlegt werden.

Der Bereich der grafischen Benutzeroberfläche, der einer Prozessgröße zugeordnet ist, weist drei Unterbereiche auf, in denen die Bezeichnung der Größe, der Status der Größe, beispielsweise ob ein aktueller Messwert vorliegt, und der Wert angezeigt werden.

Ist keine Funktion für die Verknüpfung zweier Prozessgrößen hinterlegt, so wird das prozentuale Verhältnis der zweiten Prozessgröße zur ersten Prozessgröße ermittelt und angezeigt.

Über eine spezielle Funktionstaste ist einer Übersicht aufrufbar, in der alle vorgegebene funktionellen Zusammenhänge dieser Größe mit anderen Größen angezeigt werden und dem Benutzer somit bereitgestellt werden. Insbesondere bei hochkomplexen Anlagen ist eine detaillierte Übersicht über diese Zusammenhänge hilfreich und ermöglicht ohne exakte Kenntnisse des Benutzers der Zusammenhänge und des Aufbaus der Anlage eine Steuerung und/oder Beurteilung des momentanen Zustands der Anlage.

## Patentansprüche

1. Verfahren zur Visualisierung, Bewertung und Ermittlung von Prozessgrößen auf einer Rechenanlage, wobei Prozessgrößen aus einem Speicher einlesbar und/oder von einem Benutzer eingebbar sind, die unter einer der Prozessgröße zugeordneten Speicheradresse gespeichert wird, mit einer grafischen Benutzeroberfläche, auf der in einzelnen Prozessgrößen zugeordneten Bereichen zumindest eine Bezeichnung für die Prozessgröße und der der Prozessgröße zugeordnete Wert und/oder weitere der Prozessgröße zugeordnete Angaben bzw. ein Platzhalter für einen der Prozessgröße zuzuordnenden zu bestimmenden Wert dargestellt sind, **dadurch gekennzeichnet,**
■ **dass** jeder einer Prozessgröße zugeordnete Bereich der grafischen Benutzeroberfläche zumindest ein mit einem grafischen Eingabegerät auswählbares Feld aufweist,
■ wobei durch das Auswählen des Feldes einer ersten Prozessgröße und das Ziehen einer Verbindung mit dem grafischen Eingabegerät zu einem auswählbaren Feld einer zweiten Prozessgröße eine dieser Verbindung der ersten mit der zweiten Prozessgröße in einer Datenbank und/oder in einem der Verbindung zugeordneten Speicheradresse gespeicherten Funktion zur Berechnung zumindest einer sekundären Größe in Abhängigkeit der Werte der ersten und zweiten Prozessgröße ausgeführt wird und
■ diese so erhaltene sekundäre Größe unter einer der sekundären Größe zugeordneten Speicheradresse gespeichert und auf der grafischen Benutzeroberfläche angezeigt wird und/oder in Abhängigkeit der sekundären Größe eine Steuerung des Prozesses erfolgt.

2. Verfahren nach Anspruch 1, **dadurch gekennzeichnet, dass** die sekundären Größe als das prozentuale Verhältnis der zweiten Prozessgröße zur ersten Prozessgröße berechnet und unter einer der sekundären Größe zugeordneten Speicheradresse gespeichert und auf der grafischen Benutzeroberfläche angezeigt wird und/oder in Abhängigkeit der sekundären Größe eine Steuerung des Prozesses erfolgt.

3. Verfahren nach Anspruch 1 oder 2, **dadurch gekennzeichnet, dass** der sekundären Größe ein Bereich der Benutzeroberfläche zugeordnet wird, wobei dieser Bereich der Benutzeroberfläche zumindest ein auswählbares Feld aufweist, wobei das Auswählen dieses Feldes die sekundäre Größe als erste oder zweite Prozessgröße definiert.

4. Verfahren nach einem der vorherigen Ansprüche, **dadurch gekennzeichnet, dass** der einer Prozessgröße oder einer sekundären Größe zugeordnete Bereich der grafischen Benutzeroberfläche weitere auswählbare Felder aufweist, denen Funktionen zugeordnet sind, mittels derer eine Verarbeitung der Größen durch die Rechenanlage erfolgt und mindestens ein Feld, mittels dessen Auswahl eine grafische Darstellung eines der Größe zugeordneten aus mehreren Feldern bestehenden Datensatzes erfolgt und wobei die Einträge in die Felder des der Größe zugeordneten Datensatzes veränderbar und speicherbar sind.

5. Verfahren nach einem der vorherigen Ansprüche, **dadurch gekennzeichnet, dass** die grafische Benutzeroberfläche einen Bereich aufweist, in dem bei Auswahl einer Prozessgröße oder eines einer Prozessgröße zugeordneten auswählbaren Feldes zumindest die Bezeichnung und der Wert dieser Prozessgröße vergrößert dargestellt werden.

6. Verfahren nach einem der vorherigen Ansprüche, **dadurch gekennzeichnet, dass** die grafische Benutzeroberfläche einen Bereich aufweist, in dem eine verkleinerte Gesamtübersicht über alle verfügbaren Prozessgrößen darstellbar ist, wobei in dieser Gesamtübersicht Bereiche durch Felder auswählbar sind, die bei Auswahl in einem anderen Bereich der Benutzeroberfläche in Normalgröße dargestellt werden.

7. Verfahren nach einem der vorherigen Ansprüche, **dadurch gekennzeichnet, dass** die auf der grafischen Benutzeroberfläche dargestellten Prozessgrößen aus Primärgrößen, insbesondere Messgrößen berechnete Prozessgrößen sind und dass der der Prozessgröße zugeordnete Bereich der Benutzeroberfläche ein auswählbares Feld aufweist, wobei durch das Auswählen dieses Feldes eine Darstellung einer Übersicht auf der Benutzeroberfläche über die der Prozessgröße zugrundeliegenden Primärgrößen und/oder der Werte der Primärgrößen erzeugt wird.

8. Verfahren nach einem der vorherigen Ansprüche, **dadurch gekennzeichnet, dass** das grafische Eingabegerät eine Maus mit zumindest einer Eingabetaste ist, mit der sich ein Zeiger auf der grafischen Benutzeroberfläche frei bewegen läßt und mittels der Bereiche der grafischen Benutzeroberfläche auswählbar sind, insbesondere durch Hinbewegen des Zeigers zu diesem Bereich und/oder durch Hinbewegen des Zeigers zu diesem Bereich und Betätigung der Eingabetaste der Maus.

9. Verfahren nach einem der Ansprüche 1 bis 7, **dadurch gekennzeichnet, dass** das grafische Eingabegerät ein Lichtgriffel ist, mit dem Bereiche auf der grafischen Benutzeroberfläche auf dem Wiedergabegerät, insbesondere auf dem Bildschirm, insbesondere durch Berühren des Wiedergabegerätes an der Stelle des Bereiches mit dem Lichtgriffel, auswählbar sind.

10. Verfahren nach einem der vorherigen Ansprüche, **dadurch gekennzeichnet, dass** die grafische Benutzeroberfläche in mehrere Bereiche aufgeteilt ist, wobei in den Bereichen Prozessgrößen platziert werden und wobei die Platzierung einer Prozessgröße relativ zu einer anderen Prozessgröße die Reihenfolge der Behandlung der Prozessgrößen in der Prozessrechnung definiert.

11. Verfahren nach einem der vorherigen Ansprüche, **dadurch gekennzeichnet, dass** die Anordnung der Prozessgrößen dreidimensional in mehreren Schichten erfolgt, die übereinander liegen und alternativ auf der grafischen Benutzeroberfläche anzeigbar sind, wobei Prozessgrößen unterschiedlicher Schichten verknüpfbar sind.

12. Verfahren nach einem der vorherigen Ansprüche, **dadurch gekennzeichnet, dass** die Darstellung einer Prozessgröße auf der grafischen Benutzeroberfläche zumindest dreiteilig ist, wobei neben der Bezeichnung der Prozessgröße zumindest zwei Kategorien anzeigbar sind, insbesondere der Status des Prozesses und/oder begleitende Zustandsbeschreibungen des Prozesses sowie zumindest ein Wert, der die Prozessgröße zahlenmäßig charakterisiert.
